(19) 

Europäisches Patentamt
European Patent Office
Office européen des brevets

(11) **EP 4 462 620 A1**

(12) **EUROPEAN PATENT APPLICATION**

(43) Date of publication:
**13.11.2024 Bulletin 2024/46**

(21) Application number: **23173148.0**

(22) Date of filing: **12.05.2023**

(51) International Patent Classification (IPC):
**H02H 1/00** *(2006.01)*

(52) Cooperative Patent Classification (CPC):
**H02H 1/0023;** H02H 1/063

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **JAVORA, Radek**
  **664 62 Hrusovany u Brna (CZ)**

• **GENTSCH, Dietmar**
  **40882 Ratingen (DE)**
• **EBBINGHAUS, Werner**
  **45731 Waltrop (DE)**
• **VERNER, Miroslav**
  **678 01 Blansko (CZ)**

(74) Representative: **Maiwald GmbH**
**Engineering**
**Elisenhof**
**Elisenstrasse 3**
**80335 München (DE)**

(54) **FAULT ARC PROTECTION: CIRCUIT BREAKER SYSTEM TO INTERRUPT FAULTY SECTION**

(57)     The present invention relates to a circuit breaker system, comprising:
- a solar cell (10); and
- a circuit breaker (30);
wherein the circuit breaker is configured to operate within a low voltage, medium voltage, or high voltage switchgear;
wherein the circuit breaker comprises an electromechanics or electronic trigger mechanism;
wherein the electromechanics or electronic trigger mechanism of the circuit breaker when activated is configured to activate the circuit breaker;
wherein the circuit breaker when activated is configured to disconnect current flow within at least one part of the low voltage, medium voltage, or high voltage switchgear;
wherein the solar cell is configured to be located within a compartment of the low voltage, medium voltage, or high voltage switchgear; and
wherein the solar cell is configured to activate the electromechanics or electronic trigger mechanism of the circuit breaker due to radiation from an electrical arc fault of the switchgear impinging upon the solar cell.

Fig. 4

EP 4 462 620 A1

**Description**

<u>FIELD OF THE INVENTION</u>

The present invention relates to a circuit breaker system for a low -, medium -, or high-voltage equipment.

<u>BACKGROUND OF THE INVENTION</u>

In conventional power systems, the design of low-, medium-, and/or high-voltage switchgears uses an internal arc mitigation system that disconnects the faulty circuit in case an electrical arc fault is observed. Disconnection is achieved by operation of a circuit breaker, which is triggered by some monitoring device analyzing defined variables.

For applications where occurrence of the internal arc fault is very critical and needs to be quickly mitigated, disconnection from the circuit by the circuit breaker might be too slow a process, and therefore additional equipments/systems can be utilized that provides fast earth connection of all phases before disconnection by the circuit breaker takes place. These additional equipments/systems are called active internal arc mitigation systems.

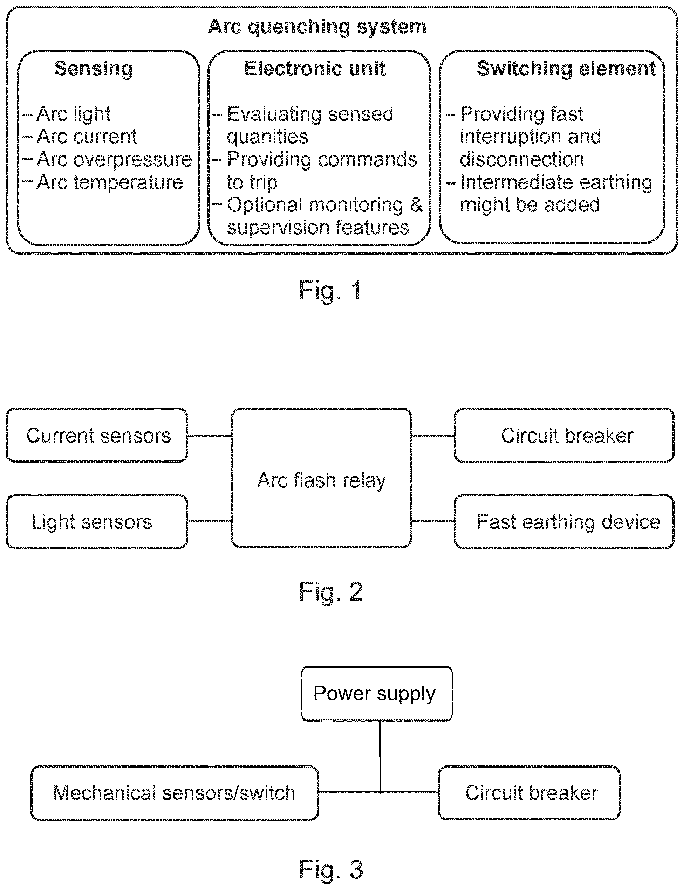

The trigger to the circuit breaker itself, disconnecting the faulty circuit, is provided from other parts of the protection system, based on measurement and/or detection of the arc-related phenomena. Fig. 1 provides a list of parts of arc quenching systems used today, that form a faulty circuit disconnecting, or arc quenching, system. This has a sensing part, that can sense, directly or indirectly, the arc light, the arc current, the arc overpressure and the arc temperature, an electronic unit, that evaluates the sensed quantities, and provides trip commands, and that itself can carry out monitoring, and a switch element that provides fast interruption and/or disconnection.

A total time duration of such an internal arc fault clearing system depends on response/activation times of all its components. The following equation provides a calculation of a total arc fault clearing time:

$$\text{time(sensing)} + \text{time(evaluation \& trigger command)} + \text{time(switching)} = \text{total arc fault}$$
$$\text{clearing time}$$

where:

   # time(sensing) is a time required by the sensing system to activate itself and/or to generate a corresponding output signal.

   # time(evaluation & trigger command) is a time needed by the control system to analyze output signals from sensing devices and to provide a trigger switching command for the interruption element.

   # time(switching) is a duration of disconnection or earthing process enabled by the circuit/actuator.

Some active arc mitigation systems use intermediate fast earthing components, that connects the faulty circuit quickly to the earth to reduce the arc impact. Such fast earthing however needs to be followed by a disconnection of the faulty circuit from the power supply, mainly by triggering an upstream circuit breaker to provide for circuit current interruption.

**Internal arc faults result in:**

- High current flowing through the switchgear (overcurrent)
- Arc burning inside the switchgear (light)
- Rapid temperature rise (burning of material)
- Rapid over-pressure (release of hot gases/particles)

Therefore, triggering devices usually monitor or detect some of these quantities to recognize the arc fault early enough.

**The following arc flash sensors or their combinations are usually used today:**

- **Overcurrent sensor**: usually a standard current sensing device (conventional current transformer or low-power current transformer) detecting overcurrent condition above a certain threshold value. It is usually connected to the protection relay.

- **Light sensor**: optical sensor which detect "abnormal" light within switchgear. These sensors use an additional evaluation unit that can process the light signal and create a trigger signal if above the threshold value. These optical sensors are usually combined with current sensors to avoid unintentional tripping caused by other light sources.

- **Pressure sensors**: pressure sensors are used to detect pressure increase caused by an arc fault. Pressure sensors might be integrated in the switchgear wall or connected to it.

- **Mechanical sensors**: an over-pressure created by the arc fault may lead to some deformations or movements of dedicated parts of the switchgear, which can be used as a trip signal. These sensors might directly create the trigger, but other solutions using deformations to activate a contact can also be used.

- **Temperature sensors**: are usually slow in their response time, thus are not typically used in active arc mitigation systems but are rather used for performance monitoring of the switchgear.

Fig. 2 shows a schematic representation of common solutions used today, based on current and light sensing. Current and light sensors provide signals to an arc flash relay that controls a circuit breaker and fast earthing device.
Nevertheless, the evaluation/electronic units used today lead to a considerable delay being introduced into the decision logic triggering the quenching devices. An example can be a need to convert an optical signal into an electrical one. Furthermore, the more complex the system is, the higher the costs are that might be associated with it.
More simple systems use for example a mechanical switch, sensing deformations of switchgear enclosure or exhaust plenum (gas duct), connected directly to a triggering circuit of the circuit breaker. This known solution is shown schematically in Fig. 3, where mechanical sensors/switch are connected directly to a circuit breaker, through an external power supply.
A disadvantage of this solution is, that mechanical sensor will react only when a considerable overpressure has already been created, causing deformations to the switchgear enclosure or its internals. Furthermore, an external power supply is needed to activate the electromechanics trigger mechanism of the circuit breaker.
Therefore, there is a need to address the above issues and look for a simple solution, which does not introduce a further delay into the decision process.
There is a need to address this issue.

SUMMARY OF THE INVENTION

Therefore, it would be advantageous to have an improved circuit breaker system in low-, medium- and high-voltage switchgears.
The object of the present invention is solved with the subject matter of the independent claims, wherein further embodiments are incorporated in the dependent claims.
In an aspect, there is provided a circuit breaker system, comprising:

- a solar cell; and
- a circuit breaker.

The circuit breaker is configured to operate within a low voltage, medium voltage, or high voltage switchgear. The circuit breaker comprises an electromechanics or electronic trigger mechanism. The electromechanics or electronic trigger mechanism of the circuit breaker when activated is configured to activate the circuit breaker. The circuit breaker when activated is configured to disconnect current flow within at least one part of the low voltage, medium voltage, or high voltage switchgear. The solar cell is configured to be located within at least one compartment of the low voltage, medium voltage, or high voltage switchgear. The solar cell is configured to activate the electromechanics or electronic trigger mechanism of the circuit breaker due to radiation from an electrical arc fault of the switchgear impinging upon the solar cell.
To disconnect current flow can be considered to be to stop current flow.
In an example, the solar cell is configured to generate a current over a threshold current level to activate the electromechanics or electronic trigger mechanism of the circuit breaker due to radiation from the electrical arc fault of the switchgear impinging upon the solar cell.
In an example, the solar cell is directly (some basic electronics may be present in the current loop) connected to the electromechanics or electronic trigger mechanism of the circuit breaker.

In an example, the solar cell itself provides power to activate the electromechanics or electronic trigger mechanism of the circuit breaker, thus eliminating the need for external power supply.

In an example, the additional current transformer connected within the protected circuit may provide auxiliary power for an electronic part, which is adapting a signal coming from the solar cell to the signal or power needed by the trigger mechanism of the circuit breaker, or for operation of a merging unit.

In an example, the circuit breaker comprises a merging unit. The merging unit (basic electronic included) is located within or associated or in line with the circuit breaker. The solar cell is directly connected to the merging unit. The merging unit is configured such that when activated the merging unit is configured to activate the electromechanics or electronic trigger mechanism of the circuit breaker. The solar cell is configured to activate the merging unit due to the radiation from the electrical arc fault of the switchgear impinging upon the solar cell.

In an example, the merging unit comprises at least one energy storage unit, and activation of the merging unit is configured to release energy from one or more of the at least one energy storage unit to activate the electromechanics or electronic trigger mechanism of the circuit breaker.

In an example, the at least one stored energy unit comprises a micro gas generator or a pressurized gas container or one or more springs. A further stored energy can be charging capacitor and releasing threshold energy to trip coil.

In an example, the merging unit comprises a signal adaptation unit. The solar cell is configured to generate a signal due to radiation from the electrical arc fault of the switchgear impinging upon the solar cell. The signal adaptation unit is configured to adapt the signal from the solar cell to a signal appropriate to activate the electromechanics or electronic trigger mechanism of the circuit breaker.

In an example, the circuit breaker system comprises an arc mitigation device. The arc mitigation device is configured to be mounted to the low voltage, medium voltage, or high voltage switchgear. The arc mitigation device when activated is configured to stop or limit current flow within at least one part of the low voltage, medium voltage, or high voltage switchgear. The solar cell is configured to cause the arc mitigation device to activate due to the radiation from the electrical arc fault of the switchgear impinging upon the solar cell.

In an example, the solar cell is configured to generate a current over up to a second threshold current level to activate the arc mitigation device due to radiation from the electrical arc fault of the switchgear impinging upon the solar cell.

In an example, the solar cell is directly connected to the arc mitigation device.

In an example, the merging unit is configured such that when activated the merging unit is configured to activate the arc mitigation device.

In an example, the activation of the merging unit is configured to release energy from one or more of the at least one the energy storage unit to activate the arc mitigation device.

In an example, the signal adaptation unit is configured to adapt the signal from the solar cell to a signal appropriate to activate the arc mitigation device.

In an example, an additional current transformer is connected within the protected circuit with the purpose to provide auxiliary power for an electronic part or parts of the system.

In an aspect, there is provided a circuit breaker system, comprising:

- a plurality of solar cells; and
- a circuit breaker.

The circuit breaker is configured to operate within a low voltage, medium voltage, or high voltage switchgear. The circuit breaker comprises an electromechanics or electronic trigger mechanism. The electromechanics or electronic trigger mechanism of the circuit breaker when activated is configured to activate the circuit breaker. The circuit breaker when activated is configured to stop current flow within at least one part of the low voltage, medium voltage, or high voltage switchgear. The plurality of solar cells are configured to be located each within at least one compartment of the low voltage, medium voltage, or high voltage switchgear. Each solar cell is configured to activate the electromechanics or electronic trigger mechanism of the circuit breaker due to radiation from an electrical arc fault of the switchgear impinging upon the solar cell.

To stop current flow can be considered to be to disconnect current flow.

In an aspect, there is provided a circuit breaker system, comprising:

- a plurality of solar cells; and
- a circuit breaker.

The circuit breaker is configured to operate within a low voltage, medium voltage, or high voltage switchgear. The circuit breaker comprises an electromechanics or electronic trigger mechanism. The electromechanics or electronic trigger mechanism of the circuit breaker when activated is configured to activate the circuit breaker. The circuit breaker when activated is configured to stop current flow within at least one part of the low voltage, medium voltage, or high voltage switchgear. The plurality of solar cells are configured to be located within at least one compartment of the low voltage, medium voltage, or high voltage switchgear. Two or more solar cells of the plurality of solar cells are configured to activate the electromechanics or electronic trigger mechanism of the circuit breaker due to radiation from an electrical arc fault of the switchgear impinging upon the two or more solar cells.

To stop current flow can be considered to be to disconnect current flow.

The above aspect and examples will become apparent from and be elucidated with reference to the embodiments described hereinafter.

## BRIEF DESCRIPTION OF THE DRAWINGS

Exemplary embodiments will be described in the following with reference to the following drawings:

Fig. 1 shows an example of general parts required by a known faulty circuit disconnection system;

Fig. 2 shows an example of a known active arc protection system based on current and light sensing;

Fig. 3 shows an example of a known passive arc protection system based on overpressure sensing;

Fig. 4 shows an example of a new circuit breaker system;

Fig. 5 shows an example of a new circuit breaker system;

Fig. 6 shows an example of a new circuit breaker system; and

Fig. 7 shows an example of a new circuit breaker system.

## DETAILED DESCRIPTION OF EMBODIMENTS

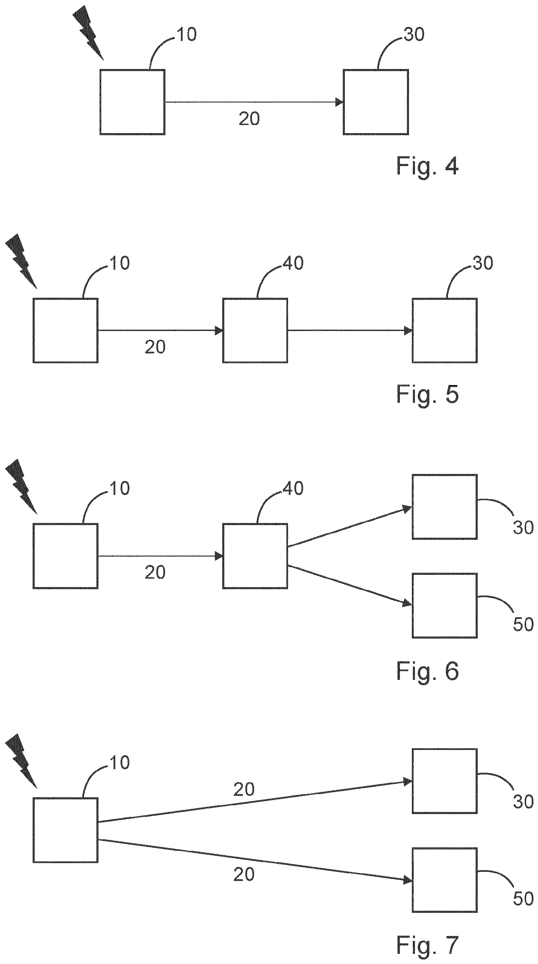

Figs. 4-7 relate to new circuit breaker system for a low-, medium-, or high- voltage switch gear.

In an example a circuit breaker system comprises a solar cell 10, and a circuit breaker 30. The circuit breaker is configured to operate within a low voltage, medium voltage, or high voltage switchgear. The circuit breaker comprises an electromechanics or electronic trigger mechanism. The electromechanics or electronic trigger mechanism of the circuit breaker when activated is configured to activate the circuit breaker. The circuit breaker when activated is configured to stop current flow within at least one part of the low voltage, medium voltage, or high voltage switchgear. The solar cell is configured to be located within a compartment of the low voltage, medium voltage, or high voltage switchgear. The solar cell is configured to activate the electromechanics or electronic trigger mechanism of the circuit breaker due to radiation from an electrical arc fault of the switchgear impinging upon the solar cell.

To stop current flow can be considered to be to disconnect current flow.

According to an example, the solar cell is configured to generate a current and voltage 20 over a threshold current and/or voltage level to activate the electromechanics or electronic trigger mechanism of the circuit breaker due to radiation from the electrical arc fault of the switchgear impinging upon the solar cell.

In an example, the solar cell is configured such that radiation impinging upon the solar cell below a threshold intensity level is not sufficient to cause the electromechanics or electronic trigger mechanism of the circuit breaker to activate.

According to an example, the solar cell is directly connected to the electromechanics or electronic trigger mechanism of the circuit breaker.

Such an example is shown in Fig. 4, where there is only one solar cell directly connected to a circuit breaker.

In an example, the solar cell itself provides power to activate the electromechanics or electronic trigger mechanism of the circuit breaker, thus eliminating the need for external power supply.

In an example, the additional current transformer connected within the protected circuit may provide auxiliary power for an electronic part, which is adapting a signal coming from the solar cell to the signal or power needed by the trigger mechanism of the circuit breaker, or for operation of a merging unit.

According to an example, the circuit breaker comprises a merging unit 40, with basic electronics. The merging unit is located within or associated or in line with the circuit breaker. The solar cell is directly connected to the merging unit. The merging unit is configured such that when activated the merging unit is configured to activate the electromechanics or electronic trigger mechanism of the circuit breaker. The solar cell is configured to activate the merging unit due to the radiation from the electrical arc fault of the switchgear impinging upon the solar cell.

According to an example, the merging unit comprises at least one energy storage unit. Activation of the merging unit is configured to release energy from one or more of the at least one energy storage unit to activate the electromechanics or electronic trigger mechanism of the circuit breaker.

According to an example, the at least one stored energy unit comprises a micro gas generator or a pressurized gas container or one or more springs. A further stored energy source can be charging capacitor and releasing threshold energy to trip coil.

According to an example, the merging unit comprises a signal adaptation unit. The solar cell is configured to generate a signal due to radiation from the electrical arc fault of the switchgear impinging upon the solar cell. The signal adaptation unit is configured to adapt the signal from the solar cell to a signal appropriate to activate the electromechanics or electronic trigger mechanism of the circuit breaker.

Such an example is shown in Fig. 5, where there is only one solar cell. The solar cell senses arc light, and provides "self powered" energy. The merging unit, which can also be termed a merging and triggering unit, collect the energy output from the solar cell, adapts the signal to the trigger of the circuit breaker, and provides the solar cell monitoring and supervision. The circuit breaker then provides for interruption and disconnecting the faulty circuit.

According to an example, the circuit breaker system comprises an arc mitigation device 50. The arc mitigation device is configured to be mounted to the low voltage, medium voltage, or high voltage switchgear. The arc mitigation device when activated is configured to stop or limit current flow within at least one part of the low voltage, medium voltage, or high voltage switchgear. The solar cell is configured to cause the arc mitigation device to activate due to the radiation from the electrical arc fault of the switchgear impinging upon the solar cell.

According to an example, the solar cell is configured generate a current and voltage 20 over up to a second threshold current and/or voltage level to activate the arc mitigation device due to radiation from the electrical arc fault of the switchgear impinging upon the solar cell.

In an example, the solar cell is configured such that radiation impinging upon the solar cell below a second threshold intensity level is not sufficient to cause the arc mitigation device to activate.

According to an example, the solar cell is directly connected to the arc mitigation device.

Such an example is shown in Fig. 7, where there is only one solar cell. The solar cell senses arc light, and provides "self-powered" energy. The circuit breaker then provides for interruption and disconnecting the faulty circuit. The arc mitigation unit, also termed a fast-earthing switch, provides for intermediate earthing.

According to an example, the merging unit is configured such that when activated the merging unit is configured to activate the arc mitigation device.

According to an example, the activation of the merging unit is configured to release energy from one or more of the at least one the energy storage unit to activate the arc mitigation device.

According to an example, the signal adaptation unit is configured to adapt the signal from the solar cell to a signal appropriate to activate the arc mitigation device.

In an example, the arc mitigation device when activated is configured to make a connection between a part of the switchgear and the ground potential.

In an example, the arc mitigation device when activated is configured to make a connection between two phases of the switchgear.

Such an example is shown in Fig. 6, where there is only one solar cell. The solar cell senses arc light, and provides "self-powered" energy. The merging unit, which can also be termed a merging and triggering unit, collects the energy output from the solar cell, adapts the signal to the trigger of the circuit breaker, and provides the solar cell monitoring and supervision. The circuit breaker then provides for interruption and disconnecting the faulty circuit. The arc mitigation unit, also termed a fast-earthing switch, provides for intermediate earthing.

In an example, the arc mitigation device is an Ultra-Fast-Earthing-Switch "UFES".

In an example, a circuit breaker system comprises a plurality of solar cells 10 and a circuit breaker 30. The circuit breaker is configured to operate within a low voltage, medium voltage, or high voltage switchgear. The circuit breaker comprises an electromechanics or electronic trigger mechanism. The electromechanics or electronic trigger mechanism of the circuit breaker when activated is configured to activate the circuit breaker. The circuit breaker when activated is configured to stop current flow within at least one part of the low voltage, medium voltage, or high voltage switchgear. The plurality of solar cells are configured to be located within at least one compartment of the low voltage, medium voltage, or high voltage switchgear. Each solar cell is configured to activate the electromechanics or electronic trigger mechanism of the circuit breaker due to radiation from an electrical arc fault of the switchgear impinging upon the solar cell.

To stop current flow can be considered to be to disconnect current flow.

In an example, each solar cell is configured generate a current and voltage 20 over a threshold current and/or voltage level to activate the electromechanics or electronic trigger mechanism of the circuit breaker due to radiation from the electrical arc fault of the switchgear impinging upon the solar cell.

In an example, each solar cell is configured such that radiation impinging upon each solar cell below a threshold intensity level is not sufficient to cause the electromechanics or electronic trigger mechanism of the circuit breaker to activate.

In an example, each solar cell is directly connected to the electromechanics or electronic trigger mechanism of the circuit breaker.

Such an example is shown in Fig. 4, where there are now a plurality of solar cells directly connected to a circuit breaker.

In an example, the circuit breaker comprises a merging unit 40. The merging unit is located within or associated or in line with the circuit breaker. Each solar cell is directly connected to the merging unit. The merging unit is configured such that when activated the merging unit is configured to activate the electromechanics or electronic trigger mechanism of the circuit breaker. Each solar cell is configured to activate the merging unit due to the radiation from the electrical arc fault of the switchgear impinging upon the solar cell.

In an example, the merging unit comprises at least one energy storage unit. Activation of the merging unit is configured to release energy from one or more of the at least one energy storage unit to activate the electromechanics or electronic trigger mechanism of the circuit breaker.

In an example, the at least one stored energy unit comprises a micro gas generator or a pressurized gas container or one or more springs.

In an example, the merging unit comprises a signal adaptation unit. Each solar cell is configured to generate a signal due to radiation from the electrical arc fault of the switchgear impinging upon the solar cell. The signal adaptation unit is configured to adapt the signal from the solar cell to a signal appropriate to activate the electromechanics or electronic trigger mechanism of the circuit breaker.

Such an example is shown in Fig. 5, where there are a plurality of solar cells. Each solar cell senses arc light, and provides "self powered" energy. The merging unit, which can also be termed a merging and triggering unit, collect the energy output from each solar cell, adapts the signal to the trigger of the circuit breaker, and provides the solar cell monitoring and supervision. The circuit breaker then provides for interruption and disconnecting the faulty circuit. Thus, the circuit breaker can be triggered based on the first signal received from one of the solar cells.

In an example, the circuit breaker system comprises an arc mitigation device 50. The arc mitigation device is configured to be mounted to the low voltage, medium voltage, or high voltage switchgear. The arc mitigation device when activated is configured to stop or limit current flow within at least one part of the low voltage, medium voltage, or high voltage switchgear. Each solar cell is configured to cause the arc mitigation device to activate due to the radiation from the electrical arc fault of the switchgear impinging upon the solar cell.

In an example, each solar cell is configured generate a current and voltage 20 over a second threshold current and/or voltage level to activate the arc mitigation device due to radiation from the electrical arc fault of the switchgear impinging upon the solar cell.

In an example, the solar cell is configured such that radiation impinging upon the solar cell below a second threshold intensity level is not sufficient to cause the arc mitigation device to activate.

In an example, each solar cell is directly connected to the arc mitigation device.

Such an example is shown in Fig. 7, where there are a plurality of solar cells. Each solar cells senses arc light, and provides "self powered" energy. The circuit breaker then provides for interruption and disconnecting the faulty circuit. The arc mitigation unit, also termed a fast earthing switch, provides for intermediate earthing. Thus, the circuit breaker can be triggered based on the first signal received from one of the solar cells, and the arc mitigation unit can be triggered based on the first signal received from one of the solar cells for intermediate earthing prior to the circuit breaker operation.

In an example, the merging unit is configured such that when activated the merging unit is configured to activate the arc mitigation device.

In an example, the activation of the merging unit is configured to release energy from one or more of the at least one the energy storage unit to activate the arc mitigation device.

In an example, the signal adaptation unit is configured to adapt the signal from each solar cell to a signal appropriate to activate the arc mitigation device.

In an example, the merging unit is configured to identify a location of the electrical arc fault based on signals received from one or more solar cells of the plurality of solar cells.

In an example, the arc mitigation device when activated is configured to make a connection between a part of the switchgear and the ground potential.

In an example, the arc mitigation device when activated is configured to make a connection between two phases of the switchgear.

In an example, the arc mitigation device is an Ultra-Fast-Earthing-Switch "UFES".

Such an example is shown in Fig. 6, where there a plurality of solar cells. Each solar cell senses arc light, and provides "self powered" energy. The merging unit, which can also be termed a merging and triggering unit, collects the energy output from the solar cell, adapts the signal to the trigger of the circuit breaker, and provides the solar cell monitoring and supervision. The circuit breaker then provides for interruption and disconnecting the faulty circuit. The arc mitigation unit, also termed a fast-earthing switch, provides for intermediate earthing. Thus, the circuit breaker can be triggered based on the first signal received from one of the solar cells, and the arc mitigation unit can be triggered based on the first signal received from one of the solar cells for intermediate earthing prior to the circuit breaker operating.

In an example a circuit breaker system comprises a plurality of solar cells 10, and a circuit breaker 30. The circuit breaker is configured to operate within a low voltage, medium voltage, or high voltage switchgear. The circuit breaker comprises an electromechanics or electronic trigger mechanism. The electromechanics or electronic trigger mechanism of the circuit breaker when activated is configured to activate the circuit breaker. The circuit breaker when activated is configured to stop current flow within at least one part of the low voltage, medium voltage, or high voltage switchgear. The plurality of solar cells are configured to be located within at least one compartment of the low voltage, medium voltage, or high voltage switchgear. Two or more solar cells of the plurality of solar cells are configured to activate the electromechanics or electronic trigger mechanism of the circuit breaker due to radiation from an electrical arc fault of the switchgear impinging upon the two or more solar cells.

To stop current flow can be considered to be to disconnect current flow.

In an example, each solar cell is configured generate a current and voltage 20 over a threshold current and/or voltage level to activate the electromechanics or electronic trigger mechanism of the circuit breaker due to radiation from the electrical arc fault of the switchgear impinging upon the solar cell.

In an example, each solar cell is configured such that radiation impinging upon each solar cell below a threshold intensity level is not sufficient to cause the electromechanics or electronic trigger mechanism of the circuit breaker to activate.

In an example, the circuit breaker comprises a merging unit 40, an electronic device especially and analogue one. The merging unit is located within or associated or in line with the circuit breaker. Each solar cell is directly connected to the merging unit. The merging unit is configured such that when activated the merging unit is configured to activate the electromechanics or electronic trigger mechanism of the circuit breaker. Two or more solar cells of the plurality of solar cells are configured to activate the merging unit due to the radiation from the electrical arc fault of the switchgear impinging upon the solar cell.

In an example, the merging unit comprises at least one energy storage unit, and wherein activation of the merging unit is configured to release energy from one or more of the at least one energy storage unit to activate the electromechanics or electronic trigger mechanism of the circuit breaker.

In an example, the at least one stored energy unit comprises a micro gas generator or a pressurized gas container or one or more springs.

In an example, the merging unit comprises a signal adaptation unit. Each solar cell is configured generate a signal due to radiation from the electrical arc fault of the switchgear impinging upon the solar cell. The signal adaptation unit is configured to adapt the signal from two or more solar cells of the plurality of solar cells into to a single signal appropriate to activate the electromechanics or electronic trigger mechanism of the circuit breaker.

Such an example is shown in Fig. 5, where there are a plurality of solar cells. Each solar cell senses arc light and provides "self-powered" energy. The merging unit, which can also be termed a merging and triggering unit, collect the energy output from each solar cell, based on the signal from two or more solar cells generates a single signal to the trigger of the circuit breaker, and provides the solar cell monitoring and supervision. The circuit breaker then provides for interruption and disconnecting the faulty circuit. Thus, the circuit breaker can be triggered based on a plurality of signals received from the solar cells, and even if one solar cell signal is below a threshold that would normally be used to trigger the circuit breaker, if more than one solar cell has generated a near threshold signal, it can be determined that there is indeed a serious arc event, that could in a very short period of time develop into an extremely serious arc event, and the decision can be made to disrupt the current immediately before such an extremely serious event occurs.

In an example, the circuit breaker system comprises an arc mitigation device 50. The arc mitigation device is configured to be mounted to the low voltage, medium voltage, or high voltage switchgear. The arc mitigation device when activated is configured to stop or limit current flow within at least one part of the low voltage, medium voltage, or high voltage switchgear. Two or more solar cells of the plurality of solar cells are configured to cause the arc mitigation device to activate due to the radiation from the electrical arc fault of the switchgear impinging upon the two or more solar cells.

In an example, each solar cell is configured generate a current and voltage 20 over a second threshold current and/or voltage level due to radiation from the electrical arc fault of the switchgear impinging upon the solar cell.

In an example, the solar cell is configured such that radiation impinging upon the solar cell below a second threshold intensity level is not sufficient to cause the arc mitigation device to activate

In an example, the merging unit is configured such that when activated the merging unit is configured to activate the arc mitigation device.

In an example, the activation of the merging unit is configured to release energy from one or more of the at least one energy storage unit to activate the arc mitigation device.

In an example, the signal adaptation unit is configured to adapt the signal from two or more solar cells of the plurality of solar cells to a signal appropriate to activate the arc mitigation device.

In an example, the merging unit is configured to identify a location of the electrical arc fault based on signals received from one or more solar cells of the plurality of solar cells.

In an example, the arc mitigation device when activated is configured to make a connection between a part of the switchgear and the ground potential.

In an example, the arc mitigation device when activated is configured to make a connection between two phases of the switchgear.

In an example, the arc mitigation device is an Ultra-Fast-Earthing-Switch "UFES".

Such an example is shown in Fig. 6, where there a plurality of solar cells. Each solar cell senses arc light and provides "self-powered" energy. The merging unit, which can also be termed a merging and triggering unit, collect the energy output from each solar cell, based on the signal from two or more solar cells generates a single signal to the trigger of the circuit breaker, and provides the solar cell monitoring and supervision.

The circuit breaker then provides for interruption and disconnecting the faulty circuit. The arc mitigation unit, also termed a fast-earthing switch, provides for intermediate earthing. Thus, the circuit breaker can be triggered based on a plurality of signals received from the solar cells, and even if one solar cell signal is below a threshold that would normally be used to trigger the circuit breaker, if more than one solar cell has generated a near threshold signal, it can be determined that there is indeed a serious arc event, that could in a very short period of time develop into an extremely serious arc event, and the decision can be made to disrupt the current immediately before such an extremely serious event occurs. At the same the arc mitigation device can be triggered based on a plurality of signals received from the solar cells, to provide for intermediate protection before the circuit breaker provides for further protection, thereby inhibiting a potential major arc event from developing and causing damage.

The circuit breaker systems are now described in specific detail with respect to detailed embodiments, where again reference is made to Figs. 4-7.

As shown in Fig. 4 a solar cell or cells 10 (providing the energy self-powered by the internal arc), is directly connected to the electromechanics or electronic trigger mechanism of the circuit breaker 30.

The solar cell is sensing the light of the arc and thus can be very fast, without the need to develop the arc too much. If directly connected to the electromechanics or electronic trigger mechanism of the circuit breaker, clearing time will be mainly driven by the circuit breaker reaction time, with negligible contribution coming from the solar cell activation, and at the same time self-powered energy from the solar cell is given to drive the electromechanics or electronic trigger.

The advantage is faster sensing, with no involvement of other parts, fully passive and analog solution (no external power supply needed) and direct triggering of the circuit breaker.

Thus, the inventors realized that they could use a circuit breaker for disconnection of the faulty circuit in the same way as done today, however instead of using multiple sensing devices (e.g., current, and light sensors) and evaluation units (light sensor relay) + generating the trip signal (e.g., protection relay) to at least one circuit breaker, see Fig. 2, they realized that they could use the solar cell directly. This then provided for a significant reduction in the arc detection and trigger time.

A more sophisticated embodiment of such a system can also include other parts, such as merging and/or triggering unit 40, see Fig. 5, that sits between the solar cell or cells 10 and the circuit breaker 30. It can have one or multiple features, such as:

# signal adaptation from at least one solar cell to fit the trigger circuit demands of at least one of the CB

# collection of inputs from several solar cells and providing single trigger to at least one CB

- tracking faulty signal (recognize & record which solar cell has been activated first, so the place of internal arc origin can be easily identified)
- monitoring and/or self-supervision of the unit or the whole circuit or system
- interlocking with other devices
- communication to other devices
- external power supply

Furthermore, system can be even more finetuned and use the solar cell(s) 10 with an analogue merging & triggering unit 40 to supply trigger and/or energy/power also at least one fast-earthing switch or arc mitigation device 50, see Fig. 6. Thus, one or more solar cells 10 are connected to a merging and triggering unit 40, with outputs from the merging and triggering unit 40 going to a circuit breaker 30 and to an arc mitigation device 50, such as a fast-earthing switch. In the unlikely event of an electric internal arc within the switchgear, the fast-earthing switch or switches as well as circuit breaker or circuit breakers triggering circuit(s) are activated all at the same time, but due to the design or technology of actuating mechanism the fast-earthing switch(es) is earthing the faulty circuit first, followed by disconnection done by the upstream circuit breaker and/or other circuit breakers as well.

However, the merging and triggering unit 40 is not essential, whereas shown in Fig. 7 the signals from the solar cell(s) 10 can directly go the circuit breaker 30 and the arc mitigation device (fast earthing switch) 50.

Thus, the new development replaces complex and/or slower systems for detecting an internal arc in low-, medium-, or high- voltage switchgear by a solar cell. Such a solar cell is a self-powered device and generates the energy from the internal arc. The Solar cell is connected directly to the trigger circuit of the circuit breaker, and therefore activation of this breaker is not further delayed by any additional devices and arc impact on the switchgear is minimized. Furthermore, the activation of the trigger circuit is independent on availability of external power supply.

The inventors realised they could develop a circuit breaker system that only uses a solar-cell to obtain the light and the fault arc current and voltage information to make a reliable trip by the production of enough energy from the solar-cell, only in the situation when such fault mitigation is required, to activate a circuit breaker and optionally also an arc mitigation device.

It was realised that in the case of an arc fault, the light produced that can be considered to be "Light and "Current" information" can be utilized to trigger a circuit breaker and optionally also an arc mitigation device without any monitoring of arc fault current. It was realised that in the case of an arc fault the light emission is strong enough that the solar cell will produce enough energy (around 5... 10 times more energy than provide by typically given strong sunshine impinging) which exceeds a given threshold value to initiate activation of the circuit breaker and optionally also the arc mitigation device. At the same time, standard light, ambient light, or flashlight cannot produce, via the solar cell, enough energy to trip the circuit breaker or the arc mitigation device. In case of flashlight and the time duration of flash we can clearly indicate by electronic and avoid tripping due to current and time measurement.

Thus, currently the detection of an internal arc fault inside a switchgear / circuit is done by means of an optical arc flash sensor, which triggers an external power supplied electronic device with a charged capacitor to actuate the active primary arc mitigation device, and this is linked with determination of a current threshold value. Or slow mechanical based sensing is carried out.

However, now with the new apparatus developed by the inventors, there is no need to detect both the current and the light together because the arc fault itself is used to generate enough power to trigger the circuit breaker and optionally an arc mitigation device. The new technique using a solar cell triggers and powers the trigger of the circuit breaker and optionally that of the arc mitigation device within less than 4-5ms in the situation of arc fault currents above typical values of 2kA.

The new technique provides for extremely short operation time of the primary arc mitigation devices within less than 2-3ms in the case of fault arc currents above 2kA current, in conjunction with the rapid and reliable detection of the fault, leads to the arc fault being extinguished almost immediately after it arises.

A solar-cell such as a monocrystalline-Si unit (or other solar-cell) can be selected, based on fast and durable analogue technology, to provide for a reliable, robust, and fast function.

Thus, the new technique provides for threshold tripping only in the case of an arc fault. All other light sources (sunlight or lamps in the range of up to 1000W/m$^2$) do not provide enough energy to the solar cell to provide enough power to trip the circuit breaker and optionally the arc mitigation device. With this selective technique an unwanted operation of the circuit breaker and the arc mitigation device will be avoided.

The solar cell monitors the switchgear (the circuit) on a continuous and autonomous basis without being influenced by these external light sources. This approach ensures continuous, complete equipment and personnel protection all the time, even during maintenance operations.

As detailed above, the new circuit breaker system for a low voltage, medium voltage, or high voltage switchgear detects and eliminates the arc fault in low- and medium- and high- voltage switchgear. The technique is simple and flexible and can be adapted to different switchgear configurations and ensures personnel safety and faster repair of the switchgear in the case of an internal arc fault.

The new system can be part of newly built switchgear but can also be retrofitted to already installed switchgears arrangements.

It is also to be noted that reference to switchgear is mentioned, but the new apparatus can be utilized for example in converters (DC-grid) as well.

**Claims**

1. A circuit breaker system, comprising:

      - a solar cell (10); and
      - a circuit breaker (30);

wherein the circuit breaker is configured to operate within a low voltage, medium voltage, or high voltage switchgear;

wherein the circuit breaker comprises an electromechanics or electronic trigger mechanism;

wherein the electromechanics or electronic trigger mechanism of the circuit breaker when activated is configured to activate the circuit breaker;

wherein the circuit breaker when activated is configured to stop current flow within at least one part of the low voltage, medium voltage, or high voltage switchgear;

wherein the solar cell is configured to be located within a compartment of the low voltage, medium voltage, or high voltage switchgear; and

wherein the solar cell is configured to activate the electromechanics or electronic trigger mechanism of the circuit breaker due to radiation from an electrical arc fault of the switchgear impinging upon the solar cell.

2. Circuit breaker system according to claim 1, wherein the solar cell is configured generate a current and voltage (20) over a threshold current and/or voltage level to activate the electromechanics or electronic trigger mechanism of the circuit breaker due to radiation from the electrical arc fault of the switchgear impinging upon the solar cell.

3. Circuit breaker system according to any of claims 1-2, wherein the solar cell is directly connected to the electromechanics or electronic trigger mechanism of the circuit breaker.

4. Circuit breaker system according to any of claims 1-2, wherein the circuit breaker comprises a merging unit (40), and wherein the merging unit is located within or associated or in line with the circuit breaker, and wherein the solar cell is directly connected to the merging unit, and wherein the merging unit is configured such that when activated the merging unit is configured to activate the electromechanics or electronic trigger mechanism of the circuit breaker, and wherein the solar cell is configured to activate the merging unit due to the radiation from the electrical arc fault of the switchgear impinging upon the solar cell.

5. Circuit breaker system according to claim 4, wherein the merging unit comprises at least one energy storage unit, and wherein activation of the merging unit is configured to release energy from one or more of the at least one energy storage unit to activate the electromechanics or electronic trigger mechanism of the circuit breaker.

6. Circuit breaker system according to claim 5, wherein the at least one stored energy unit comprises a micro gas generator or a pressurized gas container or one or more springs, to release breaker mechanism.

7. Circuit breaker system according to any of claims 4-6, wherein the merging unit comprises a signal adaptation unit, wherein the solar cell is configured to generate a signal due to radiation from the electrical arc fault of the switchgear impinging upon the solar cell, and wherein the signal adaptation unit is configured to adapt the signal from the solar cell to a signal appropriate to activate the electromechanics or electronic trigger mechanism of the circuit breaker.

8. Circuit breaker system according to any of claims 1-7, wherein the circuit breaker system comprises an arc mitigation device (50), wherein the arc mitigation device is configured to be mounted to the low voltage, medium voltage, or high voltage switchgear, wherein the arc mitigation device when activated is configured to stop or limit current flow within at least one part of the low voltage, medium voltage, or high voltage switchgear, and wherein the solar cell is configured to cause the arc mitigation device to activate due to the radiation from the electrical arc fault of the switchgear impinging upon the solar cell.

9. Circuit breaker system according to claim 8, wherein the solar cell is configured to generate a current and voltage (20) over up to a second threshold current and/or voltage level to activate the arc mitigation device due to radiation from the electrical arc fault of the switchgear impinging upon the solar cell.

10. Circuit breaker system according to any of claims 8-9, wherein the solar cell is directly connected to the arc mitigation device.

11. Circuit breaker system according to any of claims 8-10 when dependent upon any of claim 4-7, wherein the merging unit is configured such that when activated the merging unit is configured to activate the arc mitigation device.

12. Circuit breaker system according to claim 11 when dependent on any of claims 5-6, wherein the activation of the merging unit is configured to release energy from one or more of the at least one the energy storage unit to activate the arc mitigation device.

13. Circuit breaker system according to any of claims 11-12 when dependent upon claim 7, wherein the signal adaptation unit is configured to adapt the signal from the solar cell to a signal appropriate to activate the arc mitigation device.

14. A circuit breaker system, comprising:

   - a plurality of solar cells (10); and
   - a circuit breaker (30);

      wherein the circuit breaker is configured to operate within a low voltage, medium voltage, or high voltage switchgear;
      wherein the circuit breaker comprises an electromechanics or electronic trigger mechanism;
      wherein the electromechanics or electronic trigger mechanism of the circuit breaker when activated is configured to activate the circuit breaker;
      wherein the circuit breaker when activated is configured to stop current flow within at least one part of the low voltage, medium voltage, or high voltage switchgear;
      wherein the plurality of solar cells are configured to be located within at least one compartment of the low voltage, medium voltage, or high voltage switchgear; and
      wherein each solar cell is configured to activate the electromechanics or electronic trigger mechanism of the circuit breaker due to radiation from an electrical arc fault of the switchgear impinging upon the solar cell.

15. A circuit breaker system, comprising:

   - a plurality of solar cells (10); and
   - a circuit breaker (30);

      wherein the circuit breaker is configured to operate within a low voltage, medium voltage, or high voltage switchgear;
      wherein the circuit breaker comprises an electromechanics or electronic trigger mechanism;
      wherein the electromechanics or electronic trigger mechanism of the circuit breaker when activated is configured to activate the circuit breaker;
      wherein the circuit breaker when activated is configured to stop current flow within at least one part of the low voltage, medium voltage, or high voltage switchgear;
      wherein the plurality of solar cells are configured to be located within at least one compartment of the low voltage, medium voltage, or high voltage switchgear; and
      wherein two or more solar cells of the plurality of solar cells are configured to activate the electromechanics or electronic trigger mechanism of the circuit breaker due to radiation from an electrical arc fault of the switchgear impinging upon the two or more solar cells.

16. Circuit breaker system according to any previous claims where additional current transformer is connected within the protected circuit with the purpose to provide auxiliary power for an electronic part or parts of the system.

## Arc quenching system

| Sensing | Electronic unit | Switching element |
|---|---|---|
| – Arc light<br>– Arc current<br>– Arc overpressure<br>– Arc temperature | – Evaluating sensed quanities<br>– Providing commands to trip<br>– Optional monitoring & supervision features | – Providing fast interruption and disconnection<br>– Intermediate earthing might be added |

Fig. 1

| Current sensors | Arc flash relay | Circuit breaker |
|---|---|---|
| Light sensors | | Fast earthing device |

Fig. 2

Power supply

Mechanical sensors/switch — Circuit breaker

Fig. 3

Fig. 4

Fig. 5

Fig. 6

Fig. 7

Europäisches
Patentamt

European
Patent Office

Office européen
des brevets

# EUROPEAN SEARCH REPORT

Application Number

EP 23 17 3148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 089 866 A1 (ABB SCHWEIZ AG [CH]) 16 November 2022 (2022-11-16) <br> * abstract * <br> * paragraphs [0006], [0009], [0018], [0025]; figure 1 * <br> * paragraphs [0026], [0035], [0040], [0048] * <br> * paragraph [0056] * <br> * claims 4,12 * <br> ----- | 1-16 | INV. H02H1/00 |
| A | US 2014/071569 A1 (LIPTAK JULIUS MICHAEL [US] ET AL) 13 March 2014 (2014-03-13) <br> * abstract * <br> * figure 1 * <br> * paragraph [0021] – paragraph [0023] * <br> ----- | 1-16 | |
| A | US 2012/044600 A1 (ROSCOE GEORGE WILLIAM [US] ET AL) 23 February 2012 (2012-02-23) <br> * abstract * <br> * figures 1-2 * <br> * paragraph [0017] – paragraph [0021] * <br> ----- | 1-16 | TECHNICAL FIELDS SEARCHED (IPC) <br><br> H02H |

The present search report has been drawn up for all claims

| Place of search | Date of completion of the search | Examiner |
|---|---|---|
| Munich | 20 October 2023 | Operti, Antonio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 17 3148

20-10-2023

| Patent document cited in search report | | Publication date | Patent family member(s) | | Publication date |
|---|---|---|---|---|---|
| EP 4089866 | A1 | 16-11-2022 | EP | 4089866 A1 | 16-11-2022 |
| | | | WO | 2022238322 A1 | 17-11-2022 |
| US 2014071569 | A1 | 13-03-2014 | US | 2014071569 A1 | 13-03-2014 |
| | | | WO | 2014042941 A1 | 20-03-2014 |
| US 2012044600 | A1 | 23-02-2012 | CN | 102435917 A | 02-05-2012 |
| | | | EP | 2424059 A2 | 29-02-2012 |
| | | | JP | 5923254 B2 | 24-05-2016 |
| | | | JP | 2012044861 A | 01-03-2012 |
| | | | KR | 20120018729 A | 05-03-2012 |
| | | | US | 2012044600 A1 | 23-02-2012 |